# EUROPEAN PATENT SPECIFICATION

(11) **EP 4 541 499 B1**
(45) Date of publication and mention of the grant of the patent: **12.08.2026**
(21) Application number: 23204025.3
(22) Date of filing: 17.10.2023
(51) Int. Cl.: B23K 26/08, B23K 26/352, B23K 26/70

(54) **ARRANGEMENT FOR MARKING PART WITH LASER BEAM**
ANORDNUNG ZUR MARKIERUNG EINES TEILS MIT LASERSTRAHL
DISPOSITIF DE MARQUAGE D'UNE PIÈCE AU MOYEN D'UN FAISCEAU LASER

(43) Date of publication of application: 23.04.2025
(73) Proprietor: Cajo Technologies Oy, 90440 Kempele (FI)
(72) Inventor: Karsikas, Mika, 90440 Kempele (FI)
(74) Representative: Kolster Oy Ab

(56) References cited:
- CN-A- 1 154 640
- US-A1- 2021 309 036
- ANONYMOUS: "First-in first-out chamber for successive articles", RESEARCH DISCLOSURE, KENNETH MASON PUBLICATIONS, HAMPSHIRE, UK, GB, vol. 299, no. 88, 1 March 1989 (1989-03-01), XP007113551, ISSN: 0374-4353

## Description

### FIELD OF THE INVENTION

The invention relates to an apparatus for marking a part with laser, such as known from US 2021/309036 A1.

### BACKGROUND OF THE INVENTION

Different kind of arrangements are used to mark part(s) with a laser beam. The laser beam reflects and/or scatters from the part during marking, which can be hazardous and cause injuries to users nearby. Different kind of arrangements are used to improve safety when marking the part. However, a drawback with the prior art solutions wherein safety is taken into account is that they require several process stages.

### BRIEF DESCRIPTION OF THE INVENTION

An object of the present invention is to provide a novel arrangement for marking a part with laser beam.

The invention is characterized by the features of the independent claim 1.

The invention is based on the idea of an arrangement comprising a conveyor arrangement for conveying the part along a predetermined route. The arrangement comprises at least one laser marking apparatus for marking the part with the laser beam, wherein the laser marking apparatus is configured to mark the part in a marking area locating in the predetermined route. The arrangement comprises a safety enclosure for trapping the laser beam reflecting out from the safety enclosure, wherein the safety enclosure comprising solid material that is non-transparent to the laser beam surrounds at least the marking area and forms an open path along the predetermined route. The arrangement comprises at least one rotatable gate arranged into the open path comprising a rotatable shaft and a plurality of trapping plates coupled to the rotatable shaft around which the plurality of trapping plates rotates, wherein the plurality of the trapping plates is formed of material that prevents the laser beam to travel through the trapping plate and has a length being longer than a shortest distance from the rotatable shaft to the conveyor arrangement, and so configured to prevent the laser beam to travel out from the open path when the part is being marked and simultaneously configured to rotate thereby allowing another part to pass through said at least one rotatable gate, wherein the plurality of the trapping plates is formed of material that is configured to bend in a position where the plurality of the trapping plates extends to the conveyor arrangement by forming a deflection in said position.

An advantage of the solution there is no need to stop marking process when another part passes through said at least on rotatable gate.

Some embodiments of the invention are disclosed in the dependent claims.

### BRIEF DESCRIPTION OF THE DRAWINGS

In the following the invention will be described in greater detail by means of preferred embodiments with reference to the attached drawings, in which
Figure 1 shows schematically an arrangement for marking a part with a laser as seen in a cross-sectional view as seen from a side of the arrangement, wherein the arrangement comprises a belt conveyor,
Figure 2 shows schematically the arrangement of Figure 1 as seen in a cross-sectional view from above the arrangement,
Figure 3 shows schematically an arrangement for marking a part with a laser as seen in a cross-sectional view from above the arrangement,
Figure 4 shows schematically an arrangement for marking a part with a laser as seen in a cross-sectional view as seen from a side of the arrangement, wherein the arrangement comprises a gravitational conveyor,
Figure 5 shows schematically the arrangement of Figure 4 as seen in a cross-sectional view as seen from a front side of the arrangement,
Figure 6 shows schematically an arrangement for marking a part with a laser as seen in a cross-sectional view as seen from a side of the arrangement,
Figure 7 shows schematically a rotatable gate for being coupled to the arrangement of Figures,
Figure 8 shows schematically a rotatable gate for being coupled to the arrangement of Figures,
Figure 9 shows schematically an arrangement for marking a part with a laser as seen in a cross-sectional view as seen from a side of the arrangement, wherein the arrangement comprises a plurality of rotatable gates, and
Figure 10 shows schematically an arrangement for marking a part with a laser as seen in a cross-sectional view as seen from a side of the arrangement, wherein the arrangement comprises a plurality of rotatable gates in connection with a belt conveyor.

### DETAILED DESCRIPTION OF THE INVENTION

The articles "a" and "an" give a general sense of entities, structures, components, compositions, operations, functions, connections or the like in this document. Note also that singular terms may include pluralities.

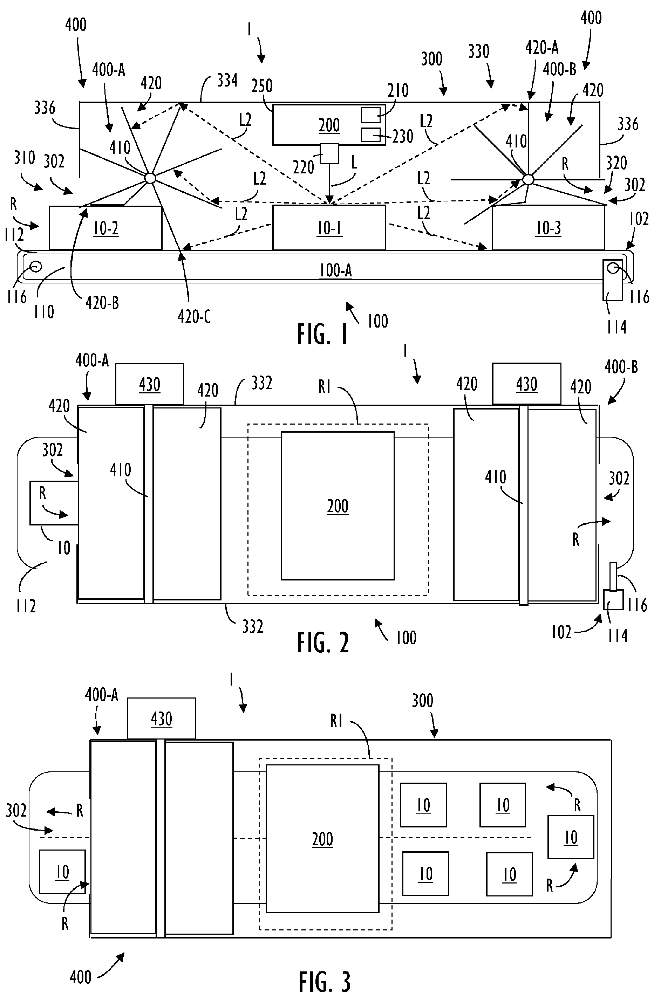

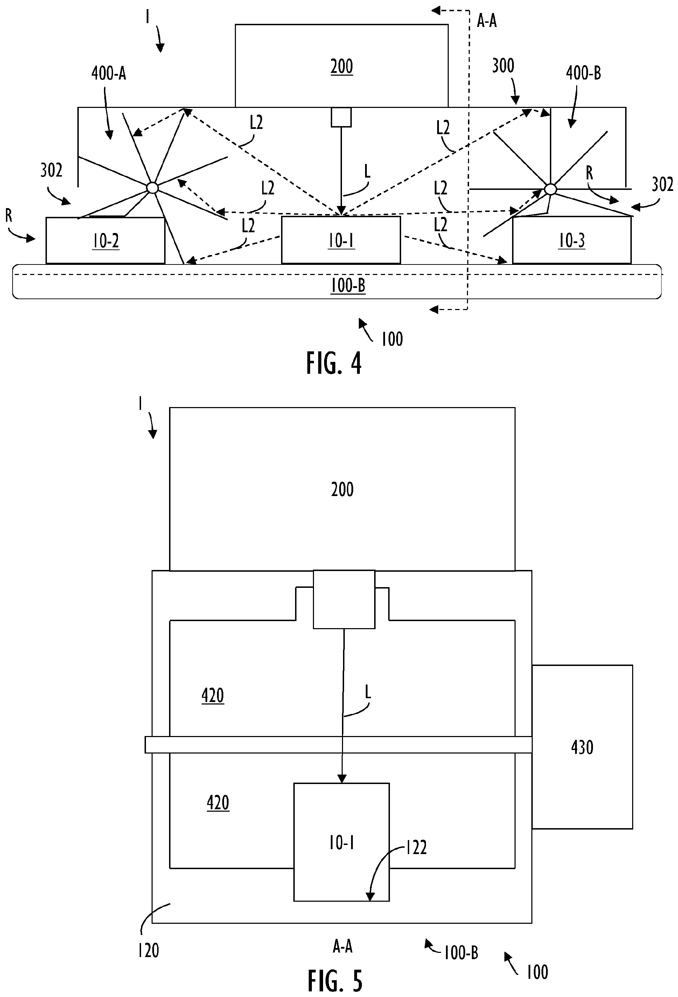

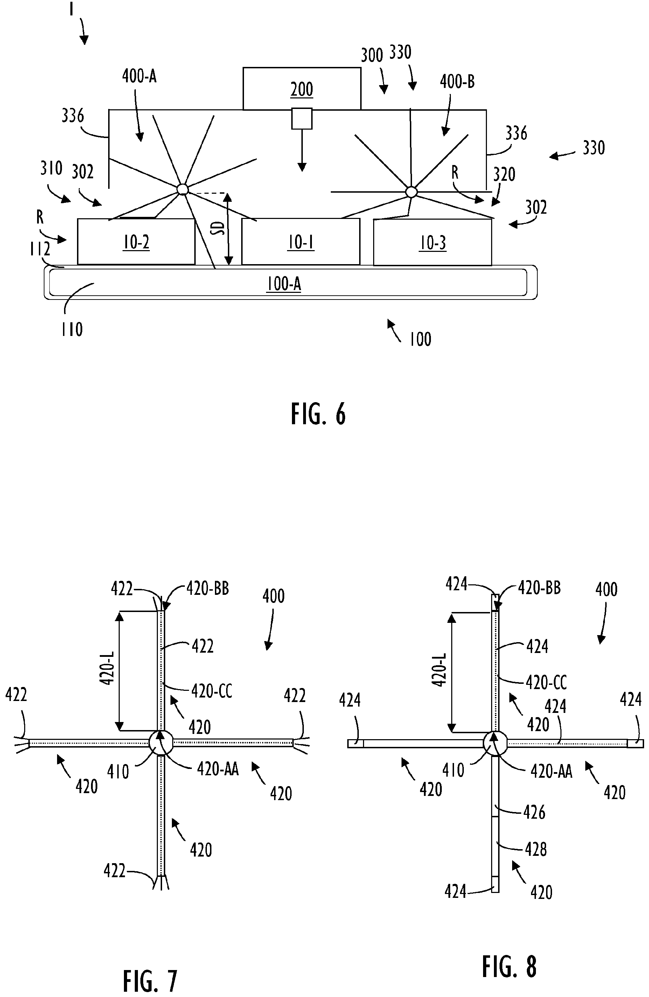

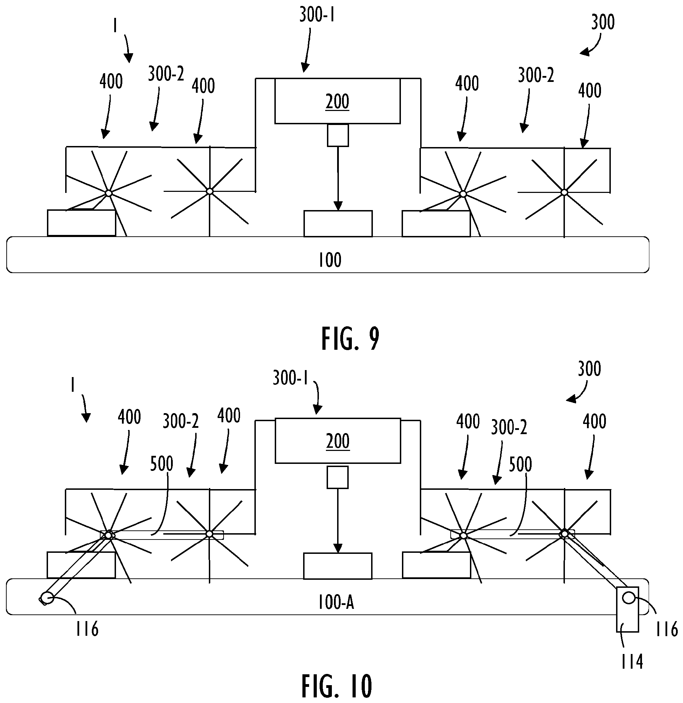

Figure 1 shows schematically an arrangement for marking a part with a laser as seen in a cross-sectional view as seen from a side of the arrangement, wherein the arrangement comprises a belt conveyor. Figure 2 shows schematically the arrangement of Figure 1 as seen in a cross-sectional view from above the arrangement. Figure 3 shows schematically an arrangement for marking a part with a laser as seen in a cross-sectional view from above the arrangement. Figure 4 shows schematically an arrangement for marking a part with a laser as seen in a cross-sectional view as seen from a side of the arrangement, wherein the arrangement comprises a gravitational conveyor. Figure 5 shows schematically the arrangement of Figure 4 as seen in a cross-sectional view A-A as seen from a front side of the arrangement. Figure 6 shows schematically an arrangement for marking a part with a laser as seen in a cross-sectional view as seen from a side of the arrangement. Figure 7 shows schematically a rotatable gate for being coupled to the arrangement of Figures. Figure 8 shows schematically a rotatable gate for being coupled to the arrangement of Figures. Figure 9 shows schematically an arrangement for marking a part with a laser as seen in a cross-sectional view as seen from a side of the arrangement, wherein the arrangement comprises a plurality of rotatable gates. Figure 10 shows schematically an arrangement for marking a part with a laser as seen in a cross-sectional view as seen from a side of the arrangement, wherein the arrangement comprises a plurality of rotatable gates in connection with a belt conveyor.

An arrangement 1 herein is for marking a part 10 with a laser beam L, i.e., an optical radiation L. The arrangement 1 comprises a conveyor arrangement 100 for conveying the part 10 along a predetermined route R. The arrangement 1 comprises at least one laser marking apparatus 200 for marking the part 10 with the laser beam L. The laser marking apparatus 200 is configured to mark the part 10 in a marking area R1 locating in the predetermined route R. The arrangement 1 comprises a safety enclosure 300 for trapping the laser beam L reflecting out from the marking area R1. The safety enclosure 300 comprises solid material that is non-transparent to the laser beam L. The safety enclosure 300 surrounds at least the marking area R1 and forms an open path 302 along the predetermined route R. The arrangement 1 comprises at least one rotatable gate 400-A arranged into the open path 302. At least one rotatable gate 400-A is configured to prevent the laser beam L to travel out from the open path 302 when the part 10 is being marked and simultaneously configured to rotate thereby allowing another part 10 to pass through said at least one rotatable gate 400-A. In other words, the arrangement 1 comprises at least one rotatable gate 400-A arranged into the open path 302 in order to simultaneously trap the laser beam L reflecting out from the open path 302 during another part 10 passes through said at least one rotatable gate 400-A. Said rotatable gate 400-A herein traps the reflecting laser whether the rotatable gate 400-A is rotating or not. Said rotatable gate 400-A herein provides a simple gate for parts 10 to pass through safely without need to be directed into an open position and/or into a closed position which would require an automation to work safely, for example.

The part 10 can be marked so that it can be identified, for example. Said marking may be a print on a surface of the part 10, for example. Said print on the surface of the part 10 can be a bar code, a numbering, and/or other form, for example. The part 10 herein must be understood broadly, because the part 10 to be marked can be a steel/plastic plate, a part of device, a device, a circuit board, a box, a carboard box, a food packaging, a metallic/plastic piece, a rope, or such. Said part 10 may comprise glass, plastic(s), wood, leather or other organic materials. Said part 10 may comprise metal(s), polymeric materials such as silicons, electrical components or such. Said part 10 may comprise thick metal portions. The part 10 may be called an object 10. The part 10 may be called an assembly 10. The part 10 may called a product 10. The part 10 may be called a solid material 10.

The conveyor arrangement 100 of Figures conveys the part(s) 10 along the predetermined route R. The predetermined route R is an elongated route via which the part 10 travels. The part 100 lays on the conveyor arrangement 100 during conveying. The conveyor arrangement 100 is configured to convey the part 10 to the marking area R1. Further, the conveyor arrangement 100 is configured to convey the part 10 out from the marking area R1. In other words, the conveyor arrangement 100 is configured to convey the part 10 through the marking area R1. The conveyor arrangement 100 may comprise a plurality of conveyors 100-A,100-B, for example. The conveyor arrangement 100 may be aligned horizontally and/or at an angle relative to a horizontal plane. The horizontal plane may be, for example, a floor of a manufacturing area, or a plane being about at 90 degrees angle relative to a gravitational axis. As an example, the predetermined route R may be a straight route as illustrated in Figures 1 and 2, for example, or the predetermined route R may form a U-turn as illustrated in Figure 3, for example.

The conveyor arrangement 100 of Figures 1, 2, 6 and 10 comprises at least one belt conveyor 100-A. The conveyor arrangement 100 may comprise a plurality of belt conveyors 100-A, wherein the plurality of belt conveyors 100-A forms the predetermined route R. The belt conveyor 100-A may be aligned horizontally. The belt conveyor 100-A may be arranged at an angle relative to said horizontal plane.

Further, the belt conveyor 100-A comprises a frame 110. The belt conveyor 100-A comprises a belt drive system 102 coupled to the frame 110. The belt drive system 102 comprises a belt 112, shafts 116 and a motor 114 coupled to each other. Further, the belt drive system 102 comprises bearings for coupling shafts 116 to the frame 110. The belt drive system 102 forms the predetermined route R, and in more detail, the belt 112 forms the predetermined route R. The part 10 travels via the predetermined route R by laying on the belt 112 that is being rotated. The belt conveyor 100-A comprises shafts 116 for coupling the belt 114 to the frame 110.

Further, the motor 114 is configured for rotating the belt 112. The motor 114 is coupled to the belt 112. The motor 114 is coupled to the belt 112 via the shafts 116 of the belt drive system 102. The motor 114 may be coupled to the belt 112 via a structure such as via bearings in order to lower friction in the conveyor arrangement 100. The motor 114 of the belt conveyor 100-A is configured to control speed of the belt 112. Said speed of the belt 112 can be called a line speed. Said speed of the belt 112 can be adjusted by the motor 114.

The conveyor arrangement 100 of Figures 4 and 5 comprises at least one gravitational conveyor 100-B. The gravitational conveyor 100-B has a structure that forms the predetermined route R via which the part 10 travels. The gravitational conveyor 100-B comprises a frame 120 and an elongated groove 122 inside the frame 120. The groove 122 forms the predetermined route R. The gravitational conveyor 100-B may comprise support elements such as bearings or sliders to minimize friction between the part 10 and said gravitational conveyor 100-B.

Further, the gravitational conveyor 100-B is arranged at an angle relative to said horizontal plane so that the part 10 is able to be conveyed by the gravitational force, wherein the part 10 travels via predetermined route R, or said in other words, wherein the part 10 travels via the groove 122. Said angle of the gravitational conveyor 100-B partially determines traveling speed for the part 10.

The conveyor arrangement 100 may comprise at least one gravitational belt conveyor, which is not shown in Figures. The gravitational belt conveyor comprises a frame 110 and a belt 112 coupled to the frame 110 as illustrated in Figures 1 and 2, but the gravitational belt conveyor does not comprise said motor 114 for rotating said belt 112. Instead of using said motor 114, the gravitational belt conveyor 100-B is arranged at an angle relative to said horizontal plane in order to make the part 10 to travel along the predetermined route R, wherein said angle is less than 90 degrees. The part 10 directs the gravitational force to the belt 112, wherein gravitational force directs the belt 112 to a rotating movement.

The conveyor arrangement 100 may comprise a roller conveyor, which is not shown in Figures. The conveyor arrangement 100 may comprise a lamella conveyor, which is not shown in Figures.

The laser marking apparatus 200 of Figures is configured to mark the part(s) 10. The laser marking apparatus 200 is configured to direct the laser beam to the laser marking area R1. A reach of the laser forms the marking area R1. The laser marking apparatus 200 is in connection with the predetermined route R. The laser marking area R1 locates in the predetermined route R. In other words, the laser marking area R1 locates on/above the predetermined route R. In more detail, the laser marking area R1 locates between the laser marking apparatus 200 and the predetermined route R. For sake of the clarity, the laser marking area R1 is at least an area where the part 10 locates during marking. The laser marking area R1 is an area where the laser can be directed by the laser marking apparatus 200. The laser marking area R1 locates inside the safety enclosure 300, which safety enclosure 300 is illustrated in more detail below. The laser marking area R1 locates between the first rotatable gate 400-A and the second rotatable gate 400-B, which rotatable gates 400 are illustrate in more detail below.

The laser marking apparatus 200 of Figures comprises at least one laser device 210 for producing the laser beam L. A laser type produced by the laser device 210 is a carbon dioxide laser or a pulsed fibre laser, for example. The laser type is typically chosen depending on materials/shapes of the part 10 to be marked, for example. The carbon dioxide laser is suitable for the permanent marking of plastic, glass, stone, wood, leather, and other organic materials, for example. The wavelength of the carbon dioxide laser may be about 10 600 nm ± about 2 000 nm. The pulsed fibre laser is suitable for the permanent marking of metals, coated metals, soft materials like polymers, such as silicon, and sensitive parts including electronic components, for example. The wavelength of the pulse fibre laser may be about 1070 nm ± about 100 nm. The wavelength of the pulse fibre laser may be about 532 nm ± about 100 nm. The wavelength of the pulse fibre laser may be about 355 nm ± about 100 nm.

The laser marking apparatus 200 of Figures comprises a directing device 220 configured to direct the laser to the laser marking area R1. The directing device 220 adaptively directs the laser beam L to the marking area R1. The directing device 220 causes the laser beam L to travel on the part 10 in response to the control by the controller 230, which controller 230 is disclosed in more detail below.

The laser marking apparatus 200 of Figures comprises a controller 230 configured to control the laser marking apparatus 200 to mark the part 10 with the laser. In more detail, the controller 230 controls the laser beam in a determined manner for example by controlling a direction of the laser beam, a route of the laser beam, power of the laser beam, speed of the laser beam, frequency of the laser beam, and/or whether the laser beam is on or off, for example.

The laser marking apparatus 200 of Figures comprises a housing 250 for accommodating components of the laser marking apparatus 200 therein. The laser apparatus 210, the directing device 220 and the controller 230 are arranged to the housing 250.

The laser marking apparatus 200 of Figures is in connection with the safety enclosure 300. The laser marking apparatus 200 can locate inside the safety enclosure 300 as illustrated in Figures 1, 2, 3, 9 and 10, for example. In more detail, the housing 250 of the laser marking apparatus is arranged inside the safety enclosure 300 as illustrated in Figures 1, 2, 3, 9 and 10, for example. The laser marking apparatus 200 can locate outside the safety enclosure as illustrated in Figures 4, 5 and 6, for example. In more detail, the housing 250 of the laser marking apparatus is arranged outside the safety enclosure 300 as illustrated in Figures 4, 5 and 6. If the laser marking apparatus 200 locates outside the safety enclosure 300, the safety enclosure 300 is connected to the laser marking apparatus via an opening for allowing the laser marking apparatus 200 to direct the laser beam L inside the safety enclosure 300.

The laser marking apparatus 200 can be arranged so that the laser marking area R1 is formed on the part 10, to a side of the part 10 and/or at bottom of the part 10. The laser marking apparatus 200 may locate above the part 10. The laser marking apparatus 200 may locate at side of the part 10 relative to the part 10. The laser marking apparatus 200 may locate below the part 10, in which situation the conveyor arrangement may be a roller conveyor that has gaps between the rolls, for example. There may be a plurality of laser marking apparatuses 200, wherein a plurality of side of the part 10 are marked at the same time, or wherein a top of the part 10 and a side of the part 10 is marked at the same time, for example. There may be a plurality of the laser marking apparatuses 200, wherein a plurality of the parts 10 are marked at the same time.

The safety enclosure 300 of Figures thus traps the laser beam L reflecting out from the safety enclosure 300. The safety enclosure 300 surrounds at least the marking area R1. The safety enclosure 300 surrounds at least partially the predetermined route R. The safety enclosure 300 is made of materials that prevents the laser beam L to travel through the safety enclosure 300. Said materials can be plastics and/or metals, for example. The safety enclosure 300 guides the laser beam L to a plurality of reflections. The safety enclosure 300 may comprise laser safety windows.

Further, the safety enclosure 300 of Figures is formed as follows. The safety enclosure comprises walls 330 for surrounding at least the marking area R1. The safety enclosure 300 has side walls 332 locating at sides relative to the conveyor arrangement 100, or said in other words, the safety enclosure 300 has side walls 332 locating at sides relative to the predetermined route R. The safety enclosure 300 has an upper wall 334 locating above the conveyor arrangement 100, or said in other words, the safety enclosure 300 has an upper wall 334 locating above the predetermined route R. Said upper wall 334 locates between said side walls 332 of the safety enclosure 300. Further, the safety enclosure 300 has end walls 336 locating between said side walls 332 of the safety enclosure 300. Said end walls 336 locate on the predetermined route R. Said open path 302 is arranged through said end walls 336.

The laser beam L reflects from part 10 and travels outwards from the part 10 to the safety enclosure 300, thus, to said walls 330 of the safety enclosure 300. The laser beam L that is reflected at least once can be called a reflected laser beam L2. Said reflected laser beam L2 further reflects from the safety enclosure 300 to another direction inside the safety enclosure 300. A danger of the reflecting laser beam L2 reduces during every reflection.

The open path 302 of Figures is arranged along the predetermined route R so that there is an access for the part 10 to travel along the predetermined route R. The open path 302 travels via the marking area R1.

Further, the open path 302 of the safety enclosure 300 of Figures 1, 2, 4, 5, 6, 9 and 10 comprises a first open end 310 and a second open end 320. The marking area R1 locates between the first open end 310 and the second open end 320. The first open end 310 forms an access for the part 10 to be conveyed into the safety enclosure 300. The first open end 310 is arranged to the (first) end wall 336 of the safety enclosure 300. The second open end 320 forms an access for the part 10 to be conveyed out from the safety enclosure 300. The second open end 320 locates opposite relative to the first open end 310. The second open end 320 is arranged to the (second) end wall 336 of the safety enclosure 300. The first open end 310 and the second open end 320 are arranged to said end walls 336 of the safety enclosure 300.

Further, the open path 302 of the safety enclosure 300 of Figure 3 comprises said first open end 310 and said second open end 320 being arranged to the same end wall 336.

At least one rotatable gate 400-A, i.e., the first rotatable gate 400-A, of Figures locates between the first open end 310 and the marking area R1. A purpose of the first rotatable gate 400-A is to trap the laser beam L travelling out from the safety enclosure 300. The first rotatable gate 400-A prevents the laser beam L to travel out from the safety enclosure 300 when the (first) part 10-1 is being marked. A second purpose of the first rotatable gate 400-A is to allow the (second) part 10-2, i.e., another part 10, to pass said first rotatable gate 400-A. In more detail, the first rotatable gate 400-A simultaneously traps the laser beam L reflecting out from the open path 302 during (second) part 10-2 passes through said at least one first rotatable gate 400-A. Thus, the (second) part 10-2 can be safely conveyed into the safety enclosure 300 while the (first) part 10-1 locating in the marking area R1 is being marked by the laser marking apparatus 200.

The arrangement 1 of Figures 1, 2, 4, 5, 9 and 10 comprises at least one second rotatable gate 400-B arranged into the open path 302 and configured to prevent the laser beam L to travel out from the open path 302 when the part 10 is being marked and simultaneously configured to rotate thereby allowing another part 10 to pass through said at least one second rotatable gate 400-B. Said at least one second rotatable gate 400 locates between the second open end 320 and the marking area R1. A purpose of the second rotatable gate 400-B is to trap the laser beam L travelling out from the safety enclosure 300. The second rotatable gate 400-B prevents the laser beam L to travel out from the safety enclosure 300 when the (first) part 10-1 is being marked. A second purpose of the second rotatable gate 400-B is to allow a (third) part 10-3 to pass said second rotatable gate 400-A. In more detail, the second rotatable gate 400-B simultaneously traps the laser beam L reflecting out from the open path 302 during the (third) part 10-3 passes through said at least one second rotatable gate 400-B. Thus, the (third) part 10 can be safely conveyed out from the safety enclosure 300 while the (first) part 10 locating in the marking area R1 is being marked by the laser marking apparatus 200.

For sake of the clarity, when the rotatable gate 400 prevents the laser beam L to travel out from the open path 302, the laser beam L does not travel out from the open path 302 at all, or the laser beam L has reflected many times before travelling out from the open path 302, whereby the laser beam L is not dangerous for the user anymore. As an example, a power of the laser and a wavelength of the laser affects, how many times the laser beam L need to be reflected so that the laser beam L is not dangerous for the user. The more there is rotatable gates, the harder it is for the laser beam L to travel out from the open path. The more there is rotatable gates, the more the laser beam L reflects when travelling out from the open path. The more there is trapping plates of the rotatable gates, the harder it is for the laser beam L to travel out from the open path, which trapping plates are disclosed in more detail below. The more there is trapping plates of the rotatable gates, the more the laser beam L reflects when travelling out from the open path.

The rotatable gate 400 of Figures (the at least one first rotatable gate 400-A and/or the at least one second rotatable gate 400-B) comprises a rotatable shaft 410 and a plurality of trapping plates 420 coupled to the rotatable shaft 410. The rotatable gate 400 is coupled to the safety enclosure 300.

The rotatable shaft 410 of Figures is coupled to the safety enclosure 300. The rotatable shaft 410 of the at least one (first) rotatable gate 400-A is arranged to locate above the part 100 passing through said at least one (first) rotatable gate 400-A. Correspondingly, the rotatable shaft 410 of the at least one (second) rotatable gate 400-B is arranged to locate above the part 100 passing through said at least one (second) rotatable gate 400-B. Therefore, the predetermined route R locates between said rotatable shaft 410 and the conveyor arrangement 100. Thus, the rotatable shaft 410 locates above the conveyor arrangement 100, whereby the part 10 can travel easily between said shaft 410 and conveyor arrangement 100. There may be joints and/or bearings between the shaft 410 and the safety enclosure 300, for example. There may be openings arranged through the safety enclosure 300 for coupling said shaft 410 through said openings.

Further, said rotatable shaft 410 is arranged horizontally, i.e., said rotatable shaft 410 is arranged at an angle relative to the horizontal plane, which angle is about 0 degrees. Said rotatable shaft 410 may be arranged at an angle relative to the horizontal plane which angle is between 0 and 90 degrees, or between 0 and 60 degrees, or between 0 and 30 degrees. According to an embodiment, said rotatable shaft 410 is arranged vertically. The rotatable shaft 410 is arranged to a side relative to the conveyor arrangement 100.

The trapping plates 420 of Figures are plates that prevents the reflecting laser beam L to travel out from the open pat 302, i.e., out from the safety enclosure 300 via the open path 302. The trapping plates 420 direct the laser beam L to reflect inside the safety enclosure 300. The plurality of the trapping plates 420 are coupled to the shaft 410. The trapping plate 420 comprises a first end 420-AA via which the trapping plate 420 is coupled to the shaft 410. Further, the trapping plate 420 comprises a second end 420-BB opposite the first end 420-AA. Further, the trapping plate 420 comprises sides 420-CC locating between the first end 420-AA and the second end 420-BB.

The plurality of the trapping plates 420 of Figures is configured to extend to the safety enclosure 300 when in a first position 420-A. The trapping plate 420 being in the first position is illustrated for example in Figure 1. In more detail, the second end 420-BB of the trapping plate 420 extends to the safety enclosure 300, and further in more detail, the second end 420-BB of the trapping plate 420 extends to the upper wall 334 of the safety enclosure 300. The trapping plate 420 being in the first position 420-A prevents the reflecting laser beam L2 to travel via between said trapping plate 420 and the safety enclosure 300.

Further, the plurality of the trapping plates 420 is configured to extend to the part 10 passing the at least one rotatable gate 400 when in a second position 420-B, which the at least one rotatable gate 400-A is meant to be the at least one first rotatable gate 400-A and/or at least one second rotatable gate 400-B, for sake of the clarity. The trapping plate 420 being in the second position is illustrated for example in Figure 1. In more detail, the second end 420-BB of the trapping plate 420 extends to said part 10 passing the at least one rotatable gate, and further in more detail, the second end 420-BB of the trapping plate 420 extends to an upper surface of the part 10, wherein the upper surface of the part 10 is being marked by the laser marking apparatus 200. The trapping plate 420 being in the second position 420-B prevents the reflecting laser beam L2 to travel via between said trapping plate 420 and said another part 10. The trapping plate 420 being in the second position 420-B pushes said another part 10 through said rotatable gate 400 if there is motor coupled to the rotatable gate 400, which motor is disclosed in more detail below. The trapping plate 420 being in the second position 420-B may cause said another part 10 to accelerate or brake if there is motor coupled to the rotatable gate 400.

Further, the plurality of trapping plates 420 is further configured to extend to the conveyor arrangement 100 when in a third position 420-C. The trapping plate 420 being in the third position is illustrated for example in Figure 1. In more detail if the belt conveyor 100-A is used, the trapping plate 420 extends to the belt 112 of the belt conveyor 100-A, or in more detail if the gravitational conveyor 100-B is used, the trapping plate 420 extends to the groove 122 of the gravitational conveyor 100-B. The trapping plate 420 being in the third position 420-C prevents the reflecting laser beam L2 to travel via between said trapping plate 420 and the conveyor arrangement 100.

The plurality of the trapping plates 420 of Figures has a length 420-L being longer than a shortest distance SD from the rotatable shaft 410 to the conveyor arrangement 100. Said length 420-L is longer than a shortest distance SD from the rotatable shaft to the belt of the conveyor arrangement 100. Said length 420-L is longer than a shortest distance SD from the rotatable shaft to a top of the conveyor arrangement. Said length 420-L is formed between the first end 420-AA and the second end 420-BB of the trapping plate 420. The trapping plate 420 of Figures is configured to bend in the third position 420-C. The trapping plate 420 is configured to form a deflection in said positions in order to keep the trapping plate 420 to stay longer time in said third position 420-C. Said shortest distance SD is illustrated for example in Figure 6. Said length 420-L is illustrated for example in Figure 7.

As mentioned above, the at least one rotatable gate 400-A comprises the plurality of the trapping plates 420. The at least one rotatable gate 400-A comprises eight trapping plates 420 coupled to the rotatable shaft 410, which is illustrated for example in Figure 1. However, there may be at least four trapping plates 420 coupled to the rotatable shaft 410, which is illustrated for example in Figures 7 and 8. There may be at least six trapping plates 420 coupled to the rotatable shaft 410. There may be at least eight trapping plates 420 coupled to the rotatable shaft 410.

The trappings plates 420 are made of material(s) that prevents the laser to travel through the trapping plate 420. The material may be plastic(s) and/or metal, for example. The trapping plate 420 may be a plexiglass. The material may be a laser plexiglass. The trapping plates 420 may be laser safety windows.

As mentioned above, the trapping plate 420 is configured to bend. Bending properties are achieved by choosing suitable materials for the trapping plate 420. Further, said length 420-L affects how the trapping plate 420 bends. Further, a thickness of the trapping plate 420 affects how the trapping plate 420 bends. Thus, bending properties of the trapping plate 420 is achieved by choosing the material, dimensioning the length 420-L and the thickness of the trapping plate 420.

The at least one rotatable gate 400 of Figures 7 comprises bristles 422 for covering gaps between said trapping plates 420 and the safety enclosure 300. The bristles 422 are arranged to the trapping plates 420. In more detail, the bristles 422 are arranged to the second end 420-BB of the trapping plates 420. Alternatively, or in addition, the bristles 422 are arranged to the sides 420-CC of the trapping plates 420. For sake of the clarity, the bristles 422 are only shown in Figure 7.

The at least one rotatable gate 400 of Figures 8 comprises at least one sealing profile 424 for covering gaps between said trapping plates 420 and the safety enclosure 300. The sealing profiles 424 are arranged to the trapping plates 420. In more detail, the sealing profiles 424 are arranged to the second end 420-BB of the trapping plates 420. Alternatively, or in addition, the sealing profiles 424 are arranged to the sides 420-CC of the trapping plates 420. For sake of the clarity, the sealing profiles 424 are only shown in Figure 8. For sake of the clarity, the sealing profiles 424 locating at sides of the trapping plates 420 are shown in dotted lines. The sealing profile 424 may be shaped so that it fits against said conveyor, the part and safety enclosure. The sealing profile 424 may be shaped so that its cross-section is constant. The sealing profile 424 may shaped so that its cross-section varies and/or has certain patterns.

The trapping plates 420 may have a rigid portion 426 and a flexible portion 428 as shown for example in Figure 8. Said rigid portion 426 can be used for example in order to prevent the part 10 to pass through the rotatable port 400. Said flexible portion 428 can be used in order to allow the trapping plate 420 to stay longer in said first position 420-A, second position 420-B and third position 420-C.

The arrangement 1 of Figures 1, 2, 3, 4, 5 and 9 comprises a motor 430 coupled to the at least one rotatable port 400-A. The motor 430 is configured to adjust a rotation speed (circumferential speed) of the rotatable port 400-A relative to the line speed of the conveyor arrangement 100. The rotation speed (circumferential speed) can be adjusted by the motor to be higher than the line speed of the conveyor arrangement. The rotation speed (circumferential speed) can be adjusted by the motor to be lower than the line speed of the conveyor arrangement. The rotation speed can be adjusted by the motor to be equal relative to the line speed. The rotation speed of the rotatable port 400-A is lowered by the motor 430 for lowering speed of said another part 10 passing through said at least one rotatable gate 400-A. The rotation speed of the rotatable port 400-A is increased by the motor 430 for increasing speed of said another part 10 passing through said at least one rotatable gate 400-A. The motor 430 can be used to delay/hasten the part 10 to be marked. The motor 430 can be used to keep the part 100 in place even if the belt 112 of the belt conveyor 100-A is rotating. The motor 430 can be used to help the part 10 to pass said rotatable gate 400-A.

The arrangement 1 of Figure 6 has at least one first rotatable gate 400-A and at least one second rotatable gate 400-A, which said gates are freely rotatable. Said at least one first freely rotatable first gate 400-A is configured to rotate freely. Said at least one rotatable second gate 400-B is configured to rotate freely. Said rotatable gate 400 is being rotated by the part 10 travelling on the belt 112 and therefore directing a force against the rotatable gate 400 during passing said rotatable gate 400. In other words, there is no motor coupled to said at least one rotatable first gate 400-A in Figure 6. There is no motor coupled to said at least one rotatable second gate 400-B in Figure 6.

The at least one rotatable gate 400 of Figure 10 is in connection with the conveyor arrangement 100. The at least on rotatable gate 400-A is mechanically connected to the belt drive system 102, wherein the motor 114 of the at least one belt conveyor 100-A is configured to rotate the rotatable gate 400-A. In more detail, the at least on rotatable gate 400-A is mechanically connected to the shaft 116 of at least one belt conveyor 100-A. In more detail, each first rotatable gate 400-A and each second rotatable gate 400-B is mechanically connected to the shaft 116 of the at least one belt conveyor 100-A. The arrangement 1 comprises a mechanical link 500 between the at least one rotatable gate 400 and the belt drive system 102. The arrangement 1 comprises a mechanical link between adjacent rotatable ports 400. In more detail, the arrangement 1 comprises a mechanical link 500 between the rotatable shaft 410 of the at least one rotatable gate 400 and the shaft 116 of the belt conveyor 100-A. The mechanical link 500 comprises gear wheels and belt in connection with said gear wheels, for example. The mechanical link 500 comprises gear wheels and chains in connection with said gear wheels, for example. The arrangement herein provides a solution, wherein same motor 114 rotates the belt 112 and the at least one rotatable gate 400-A.

The part 10 can be marked as follows in a first example. The part 10 is conveyed to the marking area R1. The part 10 travels during being marked by the laser marking apparatus 200. The controller of the laser marking apparatus 200 takes into account that the part 10 travels on the conveyor arrangement 100. Another part 10-2 travels during said part 10 is being marked. In other words, the plurality of parts 10 are being conveyed through the safety enclosure 300. The laser marking apparatus 200 marks each part 10 when said part 10 is in the marking area R1. The parts 10 are being conveyed at the same time when the part 10 locating in the marking area R1 is being marked.

The part 10 can be marked as follows in a second example. The part 10 travels during being marked by the laser marking apparatus 200. The laser marking apparatus 200 comprises mechanics configured to move the laser marking apparatus 200 relative to the line speed of the conveyor arrangement 100. The mechanics can comprise for example cylinders such as pneumatic cylinders or hydraulic cylinders, or the mechanics can comprise linear motors. In other words, the plurality of parts 10 are being conveyed through the safety enclosure 300. The laser marking apparatus 200 marks each part 10 when said part 10 is in the marking area R1. The parts 10 are being conveyed at the same time when the part 10 locating in the marking area R1 is being marked.

The part 10 can be marked as follows in a third example. The part 10 is stopped during being marked by the laser marking apparatus 200. The conveyor arrangement 100 stops the part 10 when laser marking apparatus 200 marks the part 10. In other words, the plurality of parts 10 are being conveyed through the safety enclosure 300. The conveyor arrangement 100 stops conveying when the part 10 is in the marking area R1. The laser marking apparatus 200 marks each part 10 when in the marking area R1. The laser marking apparatus 200 continues the conveying after the part 10 is being marked.

The part 10 can be marked as follows in a fourth example. The part 10 is stopped during being marked by the laser marking apparatus 200. Other parts 10 are still conveyed by the conveyor arrangement 100. The arrangement comprises stopper device for stopping the part 10 during the part 10 is being marked. The stopper device may be a lifter that lifts the part 10 away from the conveyor arrangement 100. When the part 10 is marked, the stopper device returns the part 10 to the conveyor arrangement 100. In other words, the plurality of parts 10 are being conveyed through the safety enclosure 300. The laser marking apparatus 200 marks each part 10 when said part 10 is in the marking area R1. The parts 10 are being conveyed at the same time when the part 10 locating in the marking area R1 is being marked.

The part 10 can be marked as follows in a fifth example. The part 10 travels during being marked by the laser marking apparatus 200. The controller of the laser marking apparatus 200 takes into account that the part 10 travels on the conveyor arrangement 100. At least one first rotatable port 400-A comprises a motor 430, wherein said first rotatable port 400-A prevents or allows another part 10 to be conveyed to the marking area R1. In other words, the plurality of parts 10 are being conveyed through the safety enclosure 300. The laser marking apparatus 200 marks each part 10 when said part 10 is in the marking area R1. The rotatable first port 400-A prevents the part 10 to pass through when the part 10 locating in the marking area R1 is being marked.

In Figures 9 and 10, the arrangement 1 is formed by using a plurality of safety enclosures 300. The safety enclosure 300 comprises a first safety enclosure 300-1. The laser marking apparatus 200 in connection with the first safety enclosure 300-1. Further, the first safety enclosure 300-1 comprises said open path 302 through said first safety enclosure 300-1. The safety enclosure 300 comprises a second safety enclosure 300-2. At least one rotatable gate 400 is arranged inside the second safety enclosure 300-2. Further, the second safety enclosure 300-2 comprises an open path 302 through said second safety enclosure 300-2. Said at least one rotatable gate 400 is arranged into the open path 302. The second safety enclosure 300-2 is connected to the first safety enclosure 300-1. The safety enclosure 300 comprises two second safety enclosures 300-2 being coupled to the first safety enclosure 300-1. Said second safety enclosures 300-2 and first safety enclosure 300-1 together forms the open path 302.

It will be obvious to a person skilled in the art that, as the technology advances, the inventive concept can be implemented in various ways. The invention and its embodiments are not limited to the examples described above but may vary within the scope of the claims.

## Claims

1. An arrangement (1) for marking a part (10) with a laser beam (L), wherein the arrangement (1) comprises
a conveyor arrangement (100) for conveying the part (10) along a predetermined route (R),
at least one laser marking apparatus (200) for marking the part (10) with the laser beam (L), wherein the laser marking apparatus (200) is configured to mark the part (10) in a marking area (R1) locating in the predetermined route (R),
a safety enclosure (300) for trapping the laser beam (L) reflecting out from the safety enclosure (300), wherein the safety enclosure (300) comprising solid material that is non-transparent to the laser beam (L) surrounds at least the marking area (R1) and forms an open path (302) along the predetermined route (R), and **characterized by**:
at least one rotatable gate (400-A) arranged into the open path (302) comprising a rotatable shaft (410) and a plurality of trapping plates (420) coupled to the rotatable shaft (410) around which the plurality of trapping plates (420) rotates, wherein the plurality of the trapping plates (420) is formed of material that prevents the laser beam (L) to travel through the trapping plate and has a length (420-L) being longer than a shortest distance (SD) from the rotatable shaft (410) to the conveyor arrangement (100), and so configured to prevent the laser beam (L) to travel out from the open path (302) when the part (10) is being marked and simultaneously configured to rotate thereby allowing another part (10-2) to pass through said at least one rotatable gate (400-A), wherein the plurality of the trapping plates (420) is formed of material that is configured to bend in a position (420-C) where the plurality of the trapping plates (420) extends to the conveyor arrangement (100) by forming a deflection in said position.

2. The arrangement (1) as claimed in claim 1, wherein the rotatable shaft (410) of the at least one rotatable gate (400-A) is coupled to the safety enclosure (300), and wherein the rotatable shaft (410) is arranged to locate above the part (100) passing through said at least one rotatable gate (400-A).

3. The arrangement (1) as claimed in claim 2, wherein the plurality of trapping plates (420) is configured to extend to the safety enclosure (300) when in a first position (420-A) and to said another part (10-2) passing through said at least one rotatable gate (400-A) when in a second position (420-B) and the position where the plurality of the trapping plates (420) extends to the conveyor arrangement (100) is a third position (420-C).

4. The arrangement (1) as claimed in any one of previous claims, wherein the at least one rotatable gate (400) comprises bristles (422) and/or at least one sealing profile (424) for covering gaps between said trapping plates (420) and the safety enclosure (300).

5. The arrangement (1) as claimed in any one of previous claims, wherein
the open path (302) of the safety enclosure (300) comprises a first open end (310) and a second open end (320), wherein the marking area (R1) locates between the first open end (310) and the second open end (320),
said at least one rotatable gate (400-A) locates between the first open end (310) and the marking area (R1), and wherein the arrangement (1) further comprises
at least one second rotatable gate (400-B) arranged into the open path (302) and configured to prevent the laser beam (L) to travel out from the open path (302) when the part (10) is being marked and simultaneously configured to rotate thereby allowing another part (10-3) to pass through said at least one second rotatable gate (400-A), wherein said at least second rotatable gate (400) locates between the second open end (320) and the marking area (R1).

6. The arrangement (1) as claimed in claim 5, wherein the arrangement (1) comprises
at least two rotatable gates (400-A) locating between the first open end (310) and the marking area (R1), and
at least two second rotatable gates (400-B) locating between the second open end (320) and the marking area (R1).

7. The arrangement (1) as claimed in any one of previous claims, wherein the arrangement (1) comprises a motor (430) coupled to the at least one rotatable port (400-A), wherein the motor (430) is configured to adjust a rotation speed of the rotatable port (400-A) relative to a line speed of the conveyor arrangement (100).

8. The arrangement (1) as claimed in claim 7, wherein the rotation speed of the rotatable port (400-A) is adjusted by the motor (430) to be lower than the line speed of the conveyor arrangement (100).

9. The arrangement (1) as claimed in claim 7 or 8, wherein the rotation speed of the rotatable port (400-A) is adjusted by the motor (430) to be higher than the line speed of the conveyor arrangement (100).

10. The arrangement (1) as claimed in any one of previous claims, wherein the safety enclosure (300) has side walls (332) locating at sides relative to the conveyor arrangement (100), an upper wall (334) locating above the conveyor arrangement (100) and locating between said side walls (332) of the safety enclosure (300), and end walls (336) locating between said side walls (332) of the safety enclosure (300) and locating on the predetermined route (R), wherein open path (302) is arranged through said end walls (336).

11. The arrangement (1) as claimed in any one of previous claims, wherein the conveyor arrangement (100) comprises
at least one belt conveyor (100-A) comprising a frame (110) and a belt drive system (102) coupled to the frame (110), wherein the belt drive system (102) forms the predetermined route (R), and wherein the belt drive system (102) comprises a belt (112), shafts (116) and a motor (114) coupled to each other.

12. The arrangement (1) as claimed in claim 11, wherein the at least on rotatable gate (400-A) is mechanically connected to the belt drive system (102), wherein the motor (114) of the at least one belt conveyor (100-A) is configured to rotate the at least one rotatable gate (400-A).

## Patentansprüche

1. Anordnung (1) zur Markierung eines Teils (10) mit einem Laserstrahl (L), wobei die Anordnung (1) Folgendes umfasst:
eine Förderanordnung (100) zur Förderung des Teils (10) entlang einer vorbestimmten Route (R),
mindestens eine Lasermarkierungseinrichtung (200) zur Markierung des Teils (10) mit dem Laserstrahl (L), wobei die Lasermarkierungseinrichtung (200) ausgebildet ist, das Teil (10) in einem Markierungsbereich (R1) zu markieren, der in der vorbestimmten Route (R) angeordnet ist,
eine Sicherheitsumhüllung (300) zur Abfangung des Laserstrahls (L), der aus der Sicherheitsumhüllung (300) heraus reflektiert wird, wobei die Sicherheitsumhüllung (300), die festes Material umfasst, das für den Laserstrahl (L) nicht transparent ist, zumindest den Markierungsbereich (R1) umgibt und einen offenen Pfad (302) entlang der vorbestimmten Route (R) bildet, und **dadurch gekennzeichnet, dass**:
mindestens ein drehbares Tor (400-A), das in dem offenen Pfad (302) angeordnet ist und eine Drehwelle (410) und eine Vielzahl von Abfangplatten (420) umfasst, die an die Drehwelle (410) gekoppelt sind, um welche sich die Vielzahl von Abfangplatten (420) dreht,
wobei die Vielzahl der Abfangplatten (420) aus Material gebildet ist, das verhindert, dass der Laserstrahl (L) durch die Abfangplatte hindurch verläuft, und eine Länge (420-L) hat, die länger als eine kürzeste Entfernung (SD) von der Drehwelle (410) zu der Förderanordnung (100) ist, und so ausgebildet ist, zu verhindern, dass der Laserstrahl (L) aus dem offenen Pfad (302) heraus verläuft, wenn das Teil (10) markiert wird, und gleichzeitig ausgebildet ist, sich zu drehen und dadurch einem anderen Teil (10-2) das Durchtreten durch das mindestens eine drehbare Tor (400-A) zu ermöglichen,
wobei die Vielzahl der Abfangplatten (420) aus Material gebildet ist, das ausgebildet ist, sich an einer Position (420-C), an der sich die Vielzahl der Abfangplatten (420) zu der Förderanordnung (100) erstreckt, durch Bilden einer Auslenkung an der Position zu biegen.

2. Anordnung (1) nach Anspruch 1, wobei die Drehwelle (410) des mindestens einen drehbaren Tors (400-A) an die Sicherheitsumhüllung (300) gekoppelt ist, und wobei die Drehwelle (410) so angeordnet ist, dass sie oberhalb des durch das mindestens eine drehbare Tor (400-A) hindurchtretenden Teils (100) angeordnet ist.

3. Anordnung (1) nach Anspruch 2, wobei die Vielzahl von Abfangplatten (420) ausgebildet ist, sich zu der Sicherheitsumhüllung (300) zu erstrecken, wenn sie sich in einer ersten Position (420-A) befindet, und sich zu dem anderen Teil (10-2), das durch das mindestens eine drehbare Tor (400-A) hindurchtritt, zu erstrecken, wenn sie sich in einer zweiten Position (420-B) befindet, und die Position, an der sich die Vielzahl der Abfangplatten (420) zu der Förderanordnung (100) erstreckt, eine dritte Position (420-C) ist.

4. Anordnung (1) nach einem der vorstehenden Ansprüche, wobei das mindestens eine drehbare Tor (400) Borsten (422) und/oder mindestens ein Dichtprofil (424) zur Abdeckung von Spalten zwischen den Abfangplatten (420) und der Sicherheitsumhüllung (300) umfasst.

5. Anordnung (1) nach einem der vorstehenden Ansprüche, wobei
der offene Pfad (302) der Sicherheitsumhüllung (300) ein erstes offenes Ende (310) und ein zweites offenes Ende (320) umfasst, wobei der Markierungsbereich (R1) zwischen dem ersten offenen Ende (310) und dem zweiten offenen Ende (320) angeordnet ist,
das mindestens eine drehbare Tor (400-A) zwischen dem ersten offenen Ende (310) und dem Markierungsbereich (R1) angeordnet ist, und wobei die Anordnung (1) weiter Folgendes umfasst:
mindestens ein zweites drehbares Tor (400-B), das in dem offenen Pfad (302) angeordnet und ausgebildet ist, zu verhindern, dass der Laserstrahl (L) aus dem offenen Pfad (302) heraus verläuft, wenn das Teil (10) markiert wird, und gleichzeitig ausgebildet ist, sich zu drehen und dadurch einem anderen Teil (10-3) das Durchtreten durch das mindestens eine zweite drehbare Tor (400-A) zu ermöglichen, wobei das mindestens zweite drehbare Tor (400) zwischen dem zweiten offenen Ende (320) und dem Markierungsbereich (R1) angeordnet ist.

6. Anordnung (1) nach Anspruch 5, wobei die Anordnung (1) Folgendes umfasst:
mindestens zwei drehbare Tore (400-A), die zwischen dem ersten offenen Ende (310) und dem Markierungsbereich (R1) angeordnet sind, und
mindestens zwei zweite drehbare Tore (400-B), die zwischen dem zweiten offenen Ende (320) und dem Markierungsbereich (R1) angeordnet sind.

7. Anordnung (1) nach einem der vorstehenden Ansprüche, wobei die Anordnung (1) einen Motor (430) umfasst, der an das mindestens eine drehbare Tor (400-A) gekoppelt ist, wobei der Motor (430) ausgebildet ist, eine Drehgeschwindigkeit des drehbaren Tors (400-A) relativ zu einer Liniengeschwindigkeit der Förderanordnung (100) einzustellen.

8. Anordnung (1) nach Anspruch 7,
wobei die Drehgeschwindigkeit des drehbaren Tors (400-A) durch den Motor (430) so eingestellt ist, dass sie niedriger als die Liniengeschwindigkeit der Förderanordnung (100) ist.

9. Anordnung (1) nach Anspruch 7 oder 8, wobei die Drehgeschwindigkeit des drehbaren Tors (400-A) durch den Motor (430) so eingestellt ist, dass sie höher als die Liniengeschwindigkeit der Förderanordnung (100) ist.

10. Anordnung (1) nach einem der vorstehenden Ansprüche, wobei die Sicherheitsumhüllung (300) Seitenwände (332) hat, die seitlich relativ zu der Förderanordnung (100) angeordnet sind, eine obere Wand (334), die oberhalb der Förderanordnung (100) angeordnet ist und zwischen den Seitenwänden (332) der Sicherheitsumhüllung (300) angeordnet ist, und Endwände (336), die zwischen den Seitenwänden (332) der Sicherheitsumhüllung (300) angeordnet sind und auf der vorbestimmten Route (R) angeordnet sind, wobei der offene Pfad (302) durch die Endwände (336) hindurch angeordnet ist.

11. Anordnung (1) nach einem der vorstehenden Ansprüche, wobei die Förderanordnung (100) Folgendes umfasst:
mindestens einen Bandförderer (100-A), der einen Rahmen (110) und ein Bandantriebssystem (102) umfasst, das an den Rahmen (110) gekoppelt ist, wobei das Bandantriebssystem (102) die vorbestimmte Route (R) bildet, und wobei das Bandantriebssystem (102) ein Band (112), Wellen (116) und einen Motor (114) umfasst, die miteinander gekoppelt sind.

12. Anordnung (1) nach Anspruch 11, wobei das mindestens eine drehbare Tor (400-A) mechanisch mit dem Bandantriebssystem (102) verbunden ist, wobei der Motor (114) des mindestens einen Bandförderers (100-A) ausgebildet ist, das mindestens eine drehbare Tor (400-A) zu drehen.

## Revendications

1. Dispositif (1) de marquage d'une pièce (10) au moyen d'un faisceau laser (L), dans lequel le dispositif (1) comprend
un dispositif de convoyage (100) pour convoyer la pièce (10) le long d'un trajet prédéterminé (R),
au moins un appareil de marquage laser (200) pour marquer la pièce (10) au moyen du faisceau laser (L), dans lequel l'appareil de marquage laser (200) est configuré pour marquer la pièce (10) dans une zone de marquage (R1) se trouvant sur le trajet prédéterminé (R),
une enceinte de sécurité (300) permettant de piéger le faisceau laser (L) se réfléchissant hors de l'enceinte de sécurité (300), dans laquelle l'enceinte de sécurité (300) comprenant un matériau solide non transparent au faisceau laser (L) entoure au moins la zone de marquage (R1) et forme un passage ouvert (302) le long du trajet prédéterminé (R), et **caractérisé par** :
au moins une porte rotative (400-A) agencée dans le passage ouvert (302) comprenant un arbre rotatif (410) et une pluralité de plaques de piégeage (420) accouplées à l'arbre rotatif (410) autour duquel la pluralité de plaques de piégeage (420) tournent, dans lequel la pluralité des plaques de piégeage (420) est formée d'un matériau qui empêche le faisceau laser (L) de se déplacer à travers la plaque de piégeage et présente une longueur (420-L) qui est supérieure à une distance la plus courte (SD) entre l'arbre rotatif (410) et le dispositif de convoyage (100), et configurée pour empêcher le faisceau laser (L) de se déplacer hors du passage ouvert (302) lors du marquage de la pièce (10) et simultanément configurée pour tourner, permettant ainsi à une autre pièce (10-2) de passer à travers ladite au moins une porte rotative (400-A), dans lequel la pluralité des plaques de piégeage (420) est formée d'un matériau qui est configuré pour se courber dans une position (420-C) où la pluralité des plaques de piégeage (420) s'étend jusqu'au dispositif de convoyage (100) en formant une déflexion dans ladite position.

2. Dispositif (1) selon la revendication 1, dans lequel l'arbre rotatif (410) de ladite au moins une porte rotative (400-A) est accouplé à l'enceinte de sécurité (300), et dans lequel l'arbre rotatif (410) est conçu pour se trouver au-dessus de la pièce (100) passant à travers ladite au moins une porte rotative (400-A).

3. Dispositif (1) selon la revendication 2, dans lequel la pluralité de plaques de piégeage (420) est configurée pour s'étendre jusqu'à l'enceinte de sécurité (300) lorsqu'elle est dans une première position (420-A) et jusqu'à ladite autre pièce (10-2) passant à travers ladite au moins une porte rotative (400-A) lorsqu'elle est dans une deuxième position (420-B) et la position où la pluralité des plaques de piégeage (420) s'étend jusqu'au dispositif de convoyage (100) est une troisième position (420-C).

4. Dispositif (1) selon l'une quelconque des revendications précédentes, dans lequel ladite au moins une porte rotative (400) comprend des poils (422) et/ou au moins un profilé d'étanchéité (424) permettant de recouvrir des espaces entre lesdites plaques de piégeage (420) et l'enceinte de sécurité (300).

5. Dispositif (1) selon l'une quelconque des revendications précédentes, dans lequel
le passage ouvert (302) de l'enceinte de sécurité (300) comprend une première extrémité ouverte (310) et une seconde extrémité ouverte (320), dans lequel la zone de marquage (R1) se trouve entre la première extrémité ouverte (310) et la seconde extrémité ouverte (320),
ladite au moins une porte rotative (400-A) se trouve entre la première extrémité ouverte (310) et la zone de marquage (R1), et dans lequel le dispositif (1) comprend en outre
au moins une seconde porte rotative (400-B) agencée dans le passage ouvert (302) et configurée pour empêcher le faisceau laser (L) de se déplacer hors du passage ouvert (302) lors du marquage de la pièce (10) et simultanément configurée pour tourner, permettant ainsi à une autre pièce (10-3) de passer à travers ladite au moins une seconde porte rotative (400-A), dans laquelle ladite au moins une seconde porte rotative (400) se trouve entre la seconde extrémité ouverte (320) et la zone de marquage (R1).

6. Dispositif (1) selon la revendication 5, dans lequel le dispositif (1) comprend
au moins deux portes rotatives (400-A) se trouvant entre la première extrémité ouverte (310) et la zone de marquage (R1), et
au moins deux secondes portes rotatives (400-B) se trouvant entre la seconde extrémité ouverte (320) et la zone de marquage (R1).

7. Dispositif (1) selon l'une quelconque des revendications précédentes, dans lequel le dispositif (1) comprend un moteur (430) accouplé à ladite au moins une porte rotative (400-A), dans lequel le moteur (430) est configuré pour ajuster une vitesse de rotation de la porte rotative (400-A) par rapport à une vitesse de ligne du dispositif de convoyage (100).

8. Dispositif (1) selon la revendication 7,
dans lequel la vitesse de rotation de la porte rotative (400-A) est ajustée par le moteur (430) de manière à être inférieure à la vitesse de ligne du dispositif de convoyage (100).

9. Dispositif (1) selon la revendication 7 ou la revendication 8, dans lequel la vitesse de rotation de la porte rotative (400-A) est ajustée par le moteur (430) de manière à être supérieure à la vitesse de ligne du dispositif de convoyage (100).

10. Dispositif (1) selon l'une quelconque des revendications précédentes, dans lequel l'enceinte de sécurité (300) présente des parois latérales (332) se trouvant sur des côtés par rapport au dispositif de convoyage (100), une paroi supérieure (334) se trouvant au-dessus du dispositif de convoyage (100) et se trouvant entre lesdites parois latérales (332) de l'enceinte de sécurité (300), et des parois d'extrémité (336) se trouvant entre lesdites parois latérales (332) de l'enceinte de sécurité (300) et se trouvant sur le trajet prédéterminé (R), dans lequel le passage ouvert (302) est agencé à travers lesdites parois d'extrémité (336).

11. Dispositif (1) selon l'une quelconque des revendications précédentes, dans lequel le dispositif de convoyage (100) comprend
au moins un transporteur à courroie (100-A) comprenant un châssis (110) et un système d'entraînement par courroie (102) accouplé au châssis (110), dans lequel le système d'entraînement par courroie (102) forme le trajet prédéterminé (R), et dans lequel le système d'entraînement par courroie (102) comprend une courroie (112), des arbres (116) et un moteur (114) accouplés les uns aux autres.

12. Dispositif (1) selon la revendication 11, dans lequel ladite au moins une porte rotative (400-A) est mécaniquement reliée au système d'entraînement par courroie (102), dans lequel le moteur (114) dudit au moins un transporteur à courroie (100-A) est configuré pour faire tourner l'au moins une porte rotative (400-A).
